# EUROPEAN PATENT SPECIFICATION

(11) **EP 0 910 610 B1**
(45) Date of publication and mention of the grant of the patent: **15.03.2000**
(21) Application number: 97931791.4
(22) Date of filing: 02.07.1997
(51) Int. Cl.: C08L 53/02

(54) **LOW ARENE CONTENT THERMOPLASTIC ELASTOMER/OIL/POLYOLEFIN COMPOSITION**
THERMOPLASTISCHE ELASTOMER/ÖL/POLYOLEFIN ZUSAMMENSETZUNG MIT NIEDRIGEM ARENGEHALT
COMPOSITION ELASTOMERE/HUILE/POLYOLEFINE THERMOPLASTIQUE A FAIBLE TENEUR D'ARENE

(30) Priority: 03.07.1996 US 675646
(43) Date of publication of application: 28.04.1999
(73) Proprietor: SHELL INTERNATIONALE RESEARCH MAATSCHAPPIJ B.V., 2596 HR Den Haag (NL)
(72) Inventor: DJIAUW, Lie, Khong, Houston, TX 77095 (US); MODIC, Michael, John, Houston, TX 77077 (US)
(86) International application number: EP9703576
(87) International publication number: WO9801506

(56) References cited:
- US-A- 4 772 657
- US-A- 5 358 986
- File WPI, Derwent accession no. 85-155417, BRIDGESTONE TIRE KK: "Thermoplastic rubber composition comprise polystyrene block copolymer olefinic modified plasticised option fill rein- forced agent"; &JP,A,60086154, 850515, DW8526
- File WPI, Derwent accession no. 88-045870, BRIDGESTONE TIRE KK: "Thermoplastic elastomer compsn. for preventing process oil bleeding - contains block copolymer of aromatic mono:alkenyl or alkenylidene and conjugated diene monomer, polyolefin and polyisobutylene"; & JP,A,63003054, 880108, DW9406
- File WPI, Derwent accessio no. 87-127127, HITACHI CABLE LTD: "Flame-resistant resin compsn. - comprises block copolymer of polystyrene and hydrogenated polyisoprene, polyolefin, softener, and flame retardant"; & JP,A,62070439, 870331, DW 8718
- File WPI, Derwent accession no. 87-141001, SUMITOMO CHEM IND KK: "Tackiness-free thermo- plastic elastomer moulding compsn. - comprises elastomer of hydrogenated block copolymer, polyolefin resin and mineral oil, softening agent and fatty acid amide"; & JP,A,62081443, 870414, DW 8720

## Description

This invention relates to thermoplastic elastomer compositions containing a block copolymer, oil and a polyolefin; to a process for preparing thermoplastic elastomeric compositions; and to articles containing thermoplastic elastomer compositions.

Extrudable elastomeric compositions having a good balance of softness and strength have been prepared by blending a styrenic block copolymer, a crystalline polyolefin, and a paraffinic oil. Such blends have been used to make a variety of products for medical and consumer markets. The known blends can have problems with surface tackiness and oil extractability as a result of the high level of oil need to achieve softness. Variations in the amounts of the components have failed to eliminate the problems and maintain the desired balance of strength and softness. The soft compounds are optionally blended with a hard filler for some uses, but the filler does not avoid the problems with surface tackiness and oil extractability.

JP-A-60086154 describes a thermoplastic rubber (elastomer) composition comprising:
(A) a block copolymer having a relatively low content (10-35%) of styrene,
(B) an olefin-type modifier and
(C) plasticisers (eg a paraffinic oil).

The composition are said to have a low compression set and a low migration of plasticiers.

This document, however, does not suggest to select crystaline polyolefins among said modifier (B). It merely takes reference to polypropylene and ethylenepropylene copolymers in general

It is an object of this invention to provide thermoplastic elastomers having greater softness for a given oil level; and

It is yet a further object of this invention to provide soft thermoplastic elastomer compositions with greater resistance to oil migration.

Now, surprisingly, thermoplastic elastomer compositions have been found having a greater softness for a given oil level, a greater resistance to oil migration and/or other advantages with respect to known thermoplastic elastomer compositions. Therefore, the present invention relates to a thermoplastic elastomer composition comprising:
a base composition comprising:
(i) 65 to 90 weight percent of a block copolymer having at least two polymerised monovinyl aromatic endblocks having a molecular weight of less than 20000 wherein the monovinyl aromatic compound is a 8-30 carbon atom monoalkenyl aromatic compound or mixtures thereof, and a midblock of hydrogenated polymerised diene wherein the diene is a 4 to 8 carbon atom conjugated diene or mixtures thereof, wherein said endblocks constitute less than 20 weight percent of said block copolymer, the molecular weight of the block copolymer is at least 50,000, and the total monovinyl aromatic content of the block copolymer is less than 20 weight percent,
(ii) 5 to 25 weight percent of a paraffinic oil, and
(iii) 5 to 15 weight percent of a polyolefin having a crystallinity of at least 50 % by weight.

Surprisingly, it has been found that the use of a low arene content thermoplastic elastomer in a rubber/oil/polyolefin composition results in good softness and processability at low oil contents where oil migration is not a problem.

### Thermoplastic Elastomer

By thermoplastic elastomer is meant a block copolymer having at least two end-blocks A made of polymerized monovinyl aromatic compound, thus giving a glassy, (resinous) aromatic segment, and a mid-block B made up at least predominantly of polymerized diene monomer, thus giving an amorphous elastomeric segment. The polymers can be linear, A-B-A, radial, (A-B)ₙX, or mixtures thereof. Some A-B diblock polymer can be present but preferably at least 70 weight percent of the block copolymer is A-B-A or radial (or otherwise branched so as to have two or more terminal (resinous) A blocks per molecule) so as to impart strength. Generally, 80 to 100 weight percent of the block copolymer has two or more terminal (resinous) A blocks per molecule and it is preferred to have essentially no diblock. In the above radial formula the n is an integer of at least 3, generally 3 to 50, more generally 6 to 13, and the X is the remnant of a coupling agent.

The A-B-A compositions can be made by either sequential polymerization or coupling. In the sequential polymerization technique, the monovinyl aromatic monomer is first introduced to produce an aromatic block followed by the introduction of the butadiene monomer to produce the rubbery midblock followed by additional monovinyl aromatic compound to produce the other terminal aromatic block. This is broadly disclosed in U.S. 3,231,635. The production of such polymers and also radial polymers is broadly disclosed in U.S. 5,194,530. Another patent broadly disclosing the anionic polymerization of thermoplastic elastomers using an organo alkali metal initiator is U.S. 4,764,572.

The aromatic component is any 8-30 carbon atom monoalkenyl aromatic compound or mixture thereof, such as styrene and substituted styrenes such as α-methylstyrene, but preferably is styrene.

The diene is any 4 to 8 carbon atom conjugated diene or mixtures thereof but is preferably 1,3-butadiene or isoprene, most preferably 1,3-butadiene.

When the diene is butadiene the polymerization may be carried out so as to give a normal vinyl content of 18 to 50 mole percent or it may be carried out using a polar compound as is known in the art to give 51 to 90 mole percent vinyl.

The thermoplastic elastomers utilized in the compositions of this invention are saturated thermoplastic elastomers in the sense that they contain little or no aliphatic unsaturation. Generally, the thermoplastic elastomers as produced contain aliphatic unsaturation and are selectively hydrogenated so as to remove most of the aliphatic unsaturation in the polymer backbone. By selective hydrogenation is meant that the aliphatic unsaturation is significantly removed while leaving unaffected most of the aromatic unsaturation. Suitable known catalysts for accomplishing this include nickel compounds in combination with a reducing agent such as an aluminum alkyl. Hydrogenation is taught in U.S. Patent 3,634,549, U.S. 3,670,054, U.S. 3,700,633 and Re 27,145.

Each individual aromatic endblock must have a molecular weight of less than 20,000. Preferably the endblocks have a molecular weight within the range of 5,000 to 20,000, most preferably 5,000 to 15,000.

The molecular weight of the copolymer is at least 50,000. For linear A-B-A polymers, the molecular weight will generally be within the range of 50,000 to 300,000. Actually, the upper limit is dictated by viscosity considerations and can be as high as can be tolerated and still be processable. The most preferred molecular weight for linear A-B-A polymers is 60,000 to 150,000. With radial polymers, the molecular weight can be much higher since these polymers have a lower viscosity for a given total molecular weight. Thus, for radial polymers the molecular weight generally will be in the range of 50,000 to 1 million, preferably 100,000 to 500,000.

The total monovinyl aromatic content of the block copolymer is less than 20 weight percent, and generally is within the range of 10 to 19 weight percent based on the total weight of the block copolymer, preferably 13 to 18 weight percent.

Block copolymers utilized in this invention, which are hydrogenated to remove the aliphatic unsaturation as noted hereinabove, can be viewed for instance in the case of butadiene as S-EB-S polymers, the S referring to the monovinyl aromatic, generally styrene, endblocks. The EB represents ethylene/butylene which is the structure resulting from the hydrogenation of polymerized 1,3-butadiene. With isoprene the designation would be S-EP-S, the EP representing ethylene/propylene.

### Oil

The oil is one which is compatible with the elastomeric mid-block segment of the elastomeric block copolymer and does not tend to go into the aromatic endblock portions to any significant degree. Thus, the oils can be viewed as paraffinic. Paraffinic oils which may be used in the elastomeric composition should be capable of being melt processed with other components of the elastomeric composition without degrading. Particularly important is the ability of the final composition to be melt extruded. An exemplary paraffinic oil is a white mineral oil available under the trade designation DRAKEOL 34 from the Pennzoil Company, Pennreco Division. DRAKEOL 34 has a specific gravity of 0.864-0.878 at 15.6°C (60°F), a flashpoint of 237.8° (460°F), and a viscosity of 0.8-0.9 cm²/sec (370-420 SUS) at 37.8°C (100°F).

### Polyolefin

The polyolefins utilized in this invention are crystalline polyolefins. That is, polyolefins having a crystallinity of at least 50% (i.e. at least 50 weight percent is crystalline). Crystallinity of polyolefins can be calculated using information on the heat loss (energy/mass x delta temperature) of melting obtained from differential scanning calorimetry and the referenced value of heat of fusion (energy/delta temperature) for a known crystal (i.e. 100% crystallinity) of the polyolefin. Most preferred are high density polyethylene which has a crystallinity of 80 to 90% and crystalline polypropylene, the crystalline polypropylene being most preferred in many applications because of the improved high temperature properties it imparts. Other suitable polyolefins include polybutene, ethylene/higher α-olefin copolymers, propylene copolymers, butylene copolymers, or mixtures of any of the above-described polyolefins. Most preferred is an injection molding grade crystalline polypropylene such as Polypropylene 5A15 homopolymer (melt flow rate 5g/10 min., from Shell Chemical Co.).

### Compounding

The thermoplastic elastomer compositions of this invention may be viewed as comprising a hydrocarbon component made up of the elastomeric block copolymer, the paraffinic oil and the crystalline polyolefin. To this hydrocarbon component can be added other ingredients such as are typically found in elastomeric compositions.

Other ingredients which do not affect the essential elastomeric characteristics of the composition may be present including pigments, fragrances, stabilizers, flame retardants, surfactants, waxes, flow promoters, solvents, and materials added to enhance processability and pellet handling of the composition. The compositions can also contain 5 to 40 weight percent based on the weight of hydrocarbon component of a filler such as a hard inorganic mineral filler.

The stabilizer can be any conventional stabilizer or stabilizer system and is frequently simply an antioxidant such as a hindered phenol. Particularly preferred is IRGANOX 1010® alone or in combination with a thiosynergist such as DLTDP. IRGANOX 1010® is tetrakis[methylene(3,5-di-t-butyl-4-hydroxyhydrocinnamate)]] methane. DLTDP is dilaurylthiodipropionate. Suitable stabilizers are shown in U.S. 5,149,741 and U.S. 4,835,200. More volatile materials such as 2,6-di-tert-butylphenol are less preferred because of the volatility.

The stabilizer is generally present in an amount within the range of 0.01 to 4, preferably 0.5 to 1 weight percent based on the weight of the base composition.

The compositions of this invention may be thought of in terms of
(A) a base composition comprising
   (i) the elastomeric block copolymer,
   (ii) the oil,
   (iii) the crystalline polyolefin, and
(B) any other ingredients.

Generally, base composition comprises 65 to 90, preferably 65 to 85, more preferably 65 to 80 weight percent of the hydrogenated low arene elastomeric block copolymer; 5 to 25, preferably 10 to 25 weight percent of said paraffinic oils; and 5 to 15, preferably 5 to 10 weight percent of the polyolefin. All of the percentages are based on the total weight of the base composition, i.e. the block copolymer, oil and polyolefin.

The ingredients preferably are compounded by contacting the block copolymer with the oil and allowing time for the oil to be absorbed into the copolymer. Generally, the copolymer will absorb the oil to the appearance of dryness. Thereafter the oil/block copolymer composition is generally dry blended in a tumble blender with the polyolefin and antioxidant after which the blend is rendered molten and extruded.

According to a further aspect, the present invention relates to a process for the preparation of a thermoplastic elastomer composition of the invention comprising: combining a block copolymer having at least two polymerised monovinyl aromatic compound endblocks having a molecular weight of less than 20,000, wherein the monovinyl aromatic compound is a 8-30 carbon atom monoalkenyl aromatic compound or mixtures thereof, and a midblock of hydrogenated polymerized diene wherein the diene is a 4 to 8 carbon atom conjugated diene or mixtures thereof, wherein said endblocks constitute less than 20 weight percent of said block copolymer the molecular weight of the block copolymer is at least 50,000, and the total monovinyl aromatic content of the block copolymer is less than 20 weight percent, with a paraffinic oil; allowing time for said block copolymer to absorb said paraffinic oil to give an oil-containing block copolymer composition; thereafter tumble blending said oil-containing block copolymer composition with a polyolefin having a crystallinity of at least 50 % by weight to give a block copolymer/oil/polyolefin mixture; and thereafter melt extruding said mixture. Any stabiliser is typically added during tumble blending.

The thermoplastic elastomer compositions may be used for utilities such as overmoulding onto hard substrates, grips, medical articles like medical tubing and other rubbery articles.

Therefore, according to yet another aspect, the present invention relates to articles containing the thermoplastic elastomer composition as described herein.

### Definitions

As used herein, the terms "tensile strength" or "TS" refer to the resistance of an elastic material to being elongated as determined in accordance with ASTM D-412 using 0.318 cm (0.125 inch) wide and 0.203 cm (0.080 inch) thick dumbbell samples that are cut from injection molded plaques. Tensile testing is performed on an INSTRON (trademark) Model 1123 Universal Test Machine utilizing a crosshead speed of 25.4 cm/min (10 inch/min).

As used herein, the terms "elongation" or "Eb" refer to the percent extension of an elastic material until breakage as determined in accordance with ASTM-D-412 as described above. A mechanical extensiometer is used during the testing to obtain a more accurate elongation. The gap distance for the extensiometer is 2.54 cm (1 inch).

As used herein, the terms "compression set" or "CS" refer to a value determined according to ASTM-D-395, Method A, Type I. Disks of diameter 2.54 cm (1 inch) are cut out of injection molded plaques. These disks are stacked to approximately 1.27 cm (0.5 inches) in height and compressed between two flat chrome plates. The degree of compression is controlled by the use of standard metal spacers. The disk stacks are placed under compression for 22 hours at room temperature or 70°C , and then allowed to recover for 30 minutes before their final thickness is measured. The value recorded represents the percent of remaining deformation and hence the lower the number the more elastomeric the material is.

As used herein, the term "hardness" refers to a value determined according to ASTM D2240 after 10 seconds of resistance on the Shore A hardness scale. The hardness value is the average of five measurements taken at different locations around a 10.16 cm x 12.7 cm (4 inch by 5 inch) injection molded plaque.

As used herein the melt flow index ("MFI") is an indication of melt viscosity determined according to ASTM D1238 Procedure A at a temperature of 230°C and 2.16 kg piston loading (Old Condition L). The procedure utilizes a dead-weight piston plastometer.

By "molecular weight" as used herein is meant the following. Molecular weights of linear block copolymer are conveniently measured by Gel Permeation Chromatography (GPC), where the GPC system has been appropriately calibrated. Polymers of known molecular weight are used to calibrate and these must be of the same molecular structure and chemical composition as the unknown linear polymers or segments that are to be measured. For anionically polymerized linear polymers, the polymer is essentially monodispersed and it is both convenient and adequately descriptive to report the "peak" molecular weight of the narrow molecular weight distribution observed. Hence, this is what is meant with regard to references herein to molecular weight of linear polymers. This is also what is meant by the references herein to the molecular weight of the aromatic resinous A block. Since polystyrene is used to calibrate, this directly gives the absolute molecular weight of polystyrene endblocks. From this and the known percent styrene, the absolute molecular weight of the midblock is calculated. That is, an aliquot is removed after the first step of the polymerization, terminated to deactivate the initiator and the molecular weight measured.

Measurement of the true molecular weight of final coupled star polymer is not as straightforward or as easy to make using GPC. This is because the star shaped molecules do not separate and elute through the packed GPC columns in the same manner as do the linear polymers used for the calibration, and, hence, the time of arrival at a UV or refractive index detector may not be a good indicator of the molecular weight. A good analytical method to use for a star polymer is to measure the weight average molecular weight by light scattering techniques. The sample is dissolved in a suitable solvent at a concentration less than 1.0 gram of sample per 100 millimeters of solvent and filtered using a syringe and porous membrane filters of less than 0.5 microns pore size directly onto the light scattering cell. The light scattering measurements are performed as a function of scattering angle and of polymer concentration using standard procedures. The differential refractive index (DRI) of the sample is measured at the same wavelength and in the same solvent used for the light scattering. Thus, the reference to molecular weight in reference to final star or radial polymers means molecular weight determined in this fashion. However, even with the star polymers, the endblocks are still measured by taking an aliquot and using GPC as described for the linear polymers.

### Example

In the following example three polymers were utilized. The first, designated "A," was a conventional thermoplastic elastomer produced as follows. Utilizing the conventional secondary butyllithium initiator, styrene then 1,3-butadiene then styrene were sequentially introduced to give an A-B-A polymer wherein the molecular weight of the segments was as follows: 10,000-47,000-10,000. The polystyrene content was 30 weight percent. Polymerization was carried out at 50°C and cyclohexane solvent. Six weight percent diethylether was added to the solvent prior to polymerization of the butadiene segment. The resulting polymer had a 1,2-addition of 35 mole percent. The polymer was then hydrogenated utilizing a conventional nickel/aluminum hydrogenation catalyst to give the S-EB-S structure.

Polymer B was a sequentially polymerized polymer prepared in a similar manner except the total polystyrene content was 18 weight percent. The resulting A-B-A polymer had a molecular weight as follows: 5,600-51,000-5,600. The polymer was hydrogenated in the same manner as Polymer A.

Polymer C was prepared in the same manner as Polymer B except with a 13 weight percent polymerized styrene content. The molecular weight was 5,300-70,000-5,300 and the vinyl content was 35 mole percent.

Polymers A, B and C were separately compounded with various amounts of oil and polyolefin as set out hereinbelow in the Table. Compounding was carried out by contacting the oil and the block copolymer and allowing 4 hours for absorption of the oil into the block copolymer. Thereafter the composition was tumbled with the polyolefin for 15 minutes and then extruded at a temperature of 235°C. From this extrudate tensile specimens and compression set specimens were molded and the melt flow determined. The results are set out hereinbelow.

**TABLE**

| | | | |
|---|---|---|---|
| Run: | 1 | 2 | 3 |
| Polymer | A¹ | B² | C³ |
| TPE⁴, % | 65 | 80 | 80 |
| PSC⁵, % | 30 | 18 | 13 |
| Oil⁶, % | 25 | 10 | 10 |
| Polyolefin⁷, % | 10 | 10 | 10 |
| TS (RT), Mpa | 11.3 | 12.7 | 10.6 |
| (psi | 1640 | 1847 | 1540) |
| Eb⁸ (RT), % | 685 | 631 | 667 |
| CS (RT), % | 20.4 | 21.2 | 26 |
| CS⁹ (70), % | 96 | 100 | 100 |
| MFI (230/2.16), g/10 min. | 4.2 | 4.1 | 3.4 |

| | | | |
|---|---|---|---|
| ¹ Commercial hydrogenated styrene-butadiene-styrene hydrogenated thermoplastic elastomer | | | |
| ² Low styrene content hydrogenated styrene-butadiene-styrene thermoplastic elastomer | | | |
| ³ Low styrene content hydrogenated styrene-butadiene-styrene thermoplastic elastomer | | | |
| ⁴ Thermoplastic elastomer (TPE), weight percent based on total weight of elastomer, oil and polyolefin | | | |
| ⁵ Polymerized styrene content (PSC) of the elastomer | | | |
| ⁶ DRAKEO® 34. Used in an amount to give all three formulations an equivalent hardness of about 60-63 S | | | |
| ⁷ Polypropylene sold under the trade designation 5A15 by Shell Oil Co. | | | |
| ⁸ Elongation at break | | | |
| ⁹ At 70°C | | | |

As can be seen comparing Control Run 1 with Invention Runs 2 and 3, all runs had comparable flow and elastomeric properties including hardness (the formulations were normalized to a comparable 60-63 hardness by the amount of oil used). However, the Invention Runs achieved these properties at dramatically lower oil contents. There is no significance to the small difference between the room temperature set for the Control polymer and Invention polymer B. Invention Polymer C had marginally poorer room temperature set indicating that the lower limit on percent end block size was being approached. However, the room temperature set demonstrated is remarkably good for a formulation with such a low oil content. The high temperature compression set test was too severe to differentiate between the materials.

## Claims

1. A thermoplastic elastomer composition comprising:
a base composition comprising:
(i) 65 to 90 weight percent of a block copolymer having at least two polymerised monovinyl aromatic endblocks having a molecular weight of less than 20000, wherein the monovinyl aromatic compound is a 8-30 carbon atom monoalkenyl aromatic compound or mixtures thereof, and a midblock of hydrogenated polymerised diene wherein the diene is a 4 to 8 carbon atom conjugated diene or mixtures thereof, wherein said endblocks constitute less than 20 weight percent of said block copolymer, the molecular weight of the block copolymer is at least 50,000, and the total monovinyl aromatic content of the block copolymer is less than 20 weight percent.
(ii) 5 to 25 weight percent of a paraffinic oil, and
(iii) 5 to 15 weight percent of a polyolefin having a crystallinity of at least 50 % by weight.

2. A thermoplastic elastomer composition as claimed in claim 1, wherein the base composition comprises 65 to 85 weight percent of the block copolymer.

3. A thermoplastic elastomer composition as claimed in claim 2, wherein the base composition comprises 65 to 80 weight percent of the block copolymer.

4. A thermoplastic elastomer composition as claimed in any one of claims 1-3, wherein the base composition comprises from 10 to 25 weight percent of the paraffinic oil.

5. A thermoplastic elastomer composition as claimed in any one of the preceding claims wherein the block copolymer comprises 10 to 19 weight percent of polymerised monovinyl aromatic compound.

6. A thermoplastic elastomer composition as claimed in any one of the preceding claims, further comprising a stabiliser, such stabiliser being present in an amount in the range of from 0.01 to 4 weight percent based on the weight of the base composition.

7. A thermoplastic elastomer composition as claimed in any one of the preceding claims, further comprising a filler and/or a flame retardant.

8. A process for the preparation of a thermoplastic elastomer composition according to any one of the preceding claims comprising: combining a block copolymer having at least two polymerised monovinyl aromatic compound endblocks having a molecular weight of less than 20,000 wherein the monovinyl aromatic compound is a 8-30 carbon atom monoalkenyl aromatic compound or mixtures thereof, and a midblock of hydrogenated polymerized diene wherein the diene is a 4 to 8 carbon atom conjugated diene or mixtures thereof, wherein said endblocks constitute less than 20 weight percent of said block copolymer, the molecular weight of the block copolymer is at least 50,000, and the total monovinyl aromattic content of the block copolymer is less than 20 weight percent, with a paraffinic oil; allowing time for said block copolymer to absorb said paraffinic oil to give an oil-containing block copolymer composition; thereafter tumble blending said oil-containing block copolymer composition with a polyolefin having a crystallinity of at least 50 % by weight to give a block copolymer/oil/polyolefin mixture; and thereafter melt extruding said mixture.

9. Articles containing the thermoplastic elastomer composition as claimed in any one of the preceding claims 1-7.

## Patentansprüche

1. Thermoplastische Elastomerzusammensetzung, die eine Grundzusammensetzung umfaßt, die
(i) 65 bis 90 Gew.-% eines Blockcopolymers mit wenigstens zwei polymerisierten monovinylaromatischen Endblöcken mit einem Molekulargewicht von weniger als 20.000, worin die monovinylaromatische Verbindung eine 8 bis 30 Kohlenstoffatome aufweisende monoalkenylaromatische Verbindung oder ein Gemisch hievon ist, und mit einem Mittelblock aus hydriertem polymerisiertem Dien, worin das Dien ein 4 bis 8 Kohlenstoffatome aufweisendes konjugiertes Dien oder ein Gemisch hievon ist, wobei die Endblöcke weniger als 20 Gew.-% dieses Blockcopolymers ausbilden, das Molekulargewicht des Blockcopolymers wenigstens 50.000 beträgt und der Gesamt-Monovinylaromatengehalt des Blockcopolymers weniger als 20 Gew.-% ausmacht,
(ii) 5 bis 25 Gew.-% eines paraffinischen Öls und
(iii)5 bis 15 Gew.-% eines Polyolefins mit einer Kristallinität von wenigstens 50 Gew.-% enthält.

2. Thermoplastische Elastomerzusammensetzung nach Anspruch 1, worin die Grundzusammensetzung 65 bis 85 Gew.-% des Blockcopolymers enthält.

3. Thermoplastische Elastomerzusammensetzung nach Anspruch 2, worin die Grundzusammensetzung 65 bis 80 Gew.-% des Blockcopolymers enthält.

4. Thermoplastische Elastomerzusammensetzung nach einem der Anspruch 1 bis 3, worin die Grundzusammensetzung 10 bis 25 Gew.-% paraffinisches Öl enthält.

5. Thermoplastische Elastomerzusammensetzung nach einem der vorstehenden Ansprüche, worin das Blockcopolymer 10 bis 19 Gew.-% polymerisierte monovinylaromatische Verbindung enthält.

6. Thermoplastische Elastomerzusammensetzung nach einem der vorstehenden Ansprüche, die weiterhin einen Stabilisator umfaßt, welcher Stabilisator in einer Menge im Bereich von 0,01 bis 4 Gew.-%, bezogen auf das Gewicht der Grundzusammensetzung, zugegen ist.

7. Thermoplastische Elastomerzusammensetzung nach einem der vorstehenden Ansprüche, die weiterhin einen Füllstoff und/oder ein Flammverzögerungsmittel umfaßt.

8. Verfahren zur Herstellung einer thermoplastischen Elastomerzusammensetzung der Erfindung, umfassend: Vereinigen eines Blockcopolymers mit einem paraffinischen Öl, welches Blockcopolymer wenigstens zwei polymerisierte Endblöcke aus einer monovinylaromatischen Verbindung mit einem Molekulargewicht von unter 20.000 aufweist, wobei die monovinylaromatische Verbindung eine monoalkenylaromatische Verbindung mit 8 bis 30 Kohlenstoffatomen oder ein Gemisch hievon ist, und einen Mittelblock aus hydriertem polymerisiertem Dien aufweist, wobei das Dien ein konjugiertes Dien mit 4 bis 8 Kohlenstoffatomen oder ein Gemisch hievon ist, wobei diese Endblöcke weniger als 20 Gew.-% des Blockcopolymers ausmachen und das Molekulargewicht des Blockcopolymers wenigstens 50.000 beträgt, und wobei der Gesamtgehalt an Monovinylaromaten des Blockcopolymers weniger als 20 Gew.-% ausmacht; Zeitlassen für das Blockcopolymer zum Absorbieren des paraffinischen Öls, zur Ausbildung einer ölhältigen Blockcopolymerzusammensetzung; danach Trommelmischen der paraffinhältigen Blockcopolymerzusammensetzung mit einem kristallinen Polyolefin, das eine Kristallinität von wenigstens 50 Gew.-% aufweist, zur Ausbildung eines Blockcopolymer/Öl/Polyolefingemisches; und dannach Schmelzextrudieren des Gemisches.

9. Gegenstände mit einem Gehalt an der thermoplastischen Elastomerzusammensetzung, wie in einem der vorstehenden Ansprüche 1 bis 7 beansprucht.

## Revendications

1. Composition d'élastomère thermoplastique comprenant :
une composition de base comprenant :
(i) 65 à 90 % en poids d'un copolymère bloc comportant au moins deux blocs d'extrémité monovinyl aromatiques polymérisés ayant un poids moléculaire inférieur à 20.000, dans laquelle le composé monovinyl aromatique est un composé monoalcényl aromatique de 8-30 atomes de carbone ou un mélange de ceux-ci, et un bloc central de diène polymérisé hydrogéné dans lequel le diène est un diène conjugué de 4 à 8 atomes de carbone ou un mélange de ceux-ci, dans laquelle les blocs d'extrémité précités constituent moins de 20 % en poids dudit copolymère bloc, le poids moléculaire du copolymère bloc est d'au moins 50.000, et la teneur en monovinyl aromatique totale du copolymère bloc est inférieure à 20 % en poids,
(ii) 5 à 25 % en poids d'une huile paraffinique, et
(iii) 5 à 15 % en poids d'une polyoléfine ayant une cristallinité d'au moins 50 % en poids.

2. Composition d'élastomère thermoplastique suivant la revendication 1, dans laquelle la composition de base comprend 65 à 85 % en poids du copolymère bloc.

3. Composition d'élastomère thermoplastique suivant la revendication 2, dans laquelle la composition de base comprend 65 à 80 % en poids du copolymère bloc.

4. Composition d'élastomère thermoplastique suivant l'une quelconque des revendications 1 à 3, dans laquelle la composition de base comprend de 10 à 25 % en poids de l'huile paraffinique.

5. Composition d'élastomère thermoplastique suivant l'une quelconque des revendications précédentes, dans laquelle le copolymère bloc comprend 10 à 19 % en poids de composé monovinyl aromatique polymérisé.

6. Composition d'élastomère thermoplastique suivant l'une quelconque des revendications précédentes, comprenant de plus un stabilisant, ce stabilisant étant présent en une quantité allant de 0,01 à 4 % en poids par rapport au poids de la composition de base.

7. Composition d'élastomère thermoplastique suivant l'une quelconque des revendications précédentes, comprenant de plus une charge et/ou un retardateur de flamme.

8. Procédé de préparation d'une composition d'élastomère thermoplastique suivant l'une quelconque des revendications précédentes, comprenant les étapes suivantes : combiner un copolymère bloc comportant au moins deux blocs d'extrémité de composé monovinyl aromatique polymérisé ayant un poids moléculaire inférieur à 20.000, dans lequel le composé monovinyl aromatique est un composé monoalcényl aromatique de 8-30 atomes de carbone ou un mélange de ceux-ci, et un bloc central de diène polymérisé hydrogéné dans lequel le diène est un diène conjugué de 4 à 8 atomes de carbone ou un mélange de ceux-ci, dans lequel les blocs d'extrémité précités constituent moins de 20 % en poids du copolymère bloc, le poids moléculaire du copolymère bloc est d'au moins 50.000, et la teneur en monovinyl aromatique totale du copolymère bloc est inférieure à 20 % en poids, avec une huile paraffinique, laisser du temps pour que le copolymère bloc absorbe l'huile paraffinique précitée pour donner une composition de copolymère bloc contenant de l'huile, par la suite mélanger avec basculement ladite composition de copolymère bloc contenant de l'huile avec une polyoléfine ayant une cristallinité d'au moins 50 % en poids pour donner un mélange de copolymère bloc/huile/polyoléfine, et ensuite extruder à chaud ledit mélange.

9. Articles contenant la composition d'élastomère thermoplastique suivant l'une quelconque des revendications 1 à 7.
